# EUROPEAN PATENT APPLICATION

(11) **EP 4 436 269 A1**
(43) Date of publication of application: **25.09.2024**
(21) Application number: 22914028.0
(22) Date of filing: 02.12.2022
(51) Int. Cl.: H04W 52/02

(54) **INFORMATION TRANSMISSION METHOD AND COMMUNICATION APPARATUS**

(30) Priority: 28.12.2021 CN 202111627373
(71) Applicant: Huawei Technologies Co., Ltd., Shenzhen, Guangdong 518129 (CN)
(72) Inventor: DU, Bingxin, Shenzhen, Guangdong 518129 (CN); ZHENG, Mingen, Shenzhen, Guangdong 518129 (CN); GAO, Hongbo, Shenzhen, Guangdong 518129 (CN)
(74) Representative: Pfenning, Meinig & Partner mbB
(86) International application number: PCT/CN2022/136180
(87) International publication number: WO 2023/124773

(57) **Abstract**

This application provides an information transmission method and an apparatus. The method includes: A radio frequency apparatus receives indication information from a network control apparatus, where the indication information indicates a usage status of a first resource, and the usage status is whether a first module carries data on the first resource; and the radio frequency apparatus turns off the first module based on the usage status when the usage status is that the first module does not carry data on the first resource, so that losses of a communication system can be effectively reduced.

## Description

This application claims priority to Chinese Patent Application No. 202111627373.8, filed with the China National Intellectual Property Administration on December 28, 2021 and entitled "INFORMATION TRANSMISSION METHOD AND COMMUNICATION APPARATUS", which is incorporated herein by reference in its entirety.

### TECHNICAL FIELD

This application relates to the field of communication technologies, and more specifically, to an information transmission method and a communication apparatus.

### BACKGROUND

When a network control apparatus schedules and manages resources, some resources, for example, some time domain resources and/or frequency domain resources, are idle, or some resources do not carry data. However, even if the some resources are idle, a radio frequency apparatus still generates a corresponding static loss. With increasing requirements for energy saving and environmental protection, currently, when the radio frequency apparatus receives downlink data from the network control apparatus, the radio frequency apparatus may implement symbol power saving by determining in real time whether a symbol carries data. In this way, when the some time domain resources do not carry data, losses of a communication system can be reduced through the symbol power saving. However, as duration of a symbol becomes shorter, a chip in the radio frequency apparatus needs to have a high symbol-level detection capability to determine in real time whether a symbol carries data. This brings challenges to a capability of the chip in the radio frequency apparatus and even causes power-saving errors. In addition, when the radio frequency apparatus receives uplink data (which is an analog radio frequency signal) from a terminal apparatus, the radio frequency apparatus cannot determine in real time whether a symbol carries data when processing the uplink data. Therefore, in this method, losses of the communication system cannot be reduced when the uplink data is processed.

Therefore, an information transmission method and a communication apparatus are urgently needed to effectively reduce the losses of the communication system.

### SUMMARY

This application provides an information transmission method and a communication apparatus, which can effectively reduce losses of a communication system.

According to a first aspect, an information transmission method is provided. The method may be performed by a radio frequency apparatus or a chip in a radio frequency apparatus. The method includes: The radio frequency apparatus receives indication information from a network control apparatus, where the indication information indicates a usage status of a first resource, and the usage status is whether a first module carries data on the first resource; and the radio frequency apparatus turns off the first module based on the usage status when the usage status is that the first module does not carry data on the first resource.

Therefore, in this application, the network control apparatus may send, to the radio frequency apparatus, the indication information indicating the usage status of the first resource. When the first module does not carry data on the first resource, the radio frequency apparatus may turn off the first module, so that losses of a communication system can be effectively reduced.

With reference to the first aspect, in some implementations of the first aspect, the method further includes: The first resource includes a first time resource; and that the radio frequency apparatus turns off the first module based on the usage status when the usage status is that the first module does not carry data on the first resource includes: The radio frequency apparatus turns off the first module at a first moment corresponding to the first time resource when the usage status is that the first module does not carry data on the first time resource.

Therefore, in this application, the network control apparatus may indicate the radio frequency apparatus to turn off the first module at the first moment corresponding to the first time resource, to improve flexibility of turning-off control.

With reference to the first aspect, in some implementations of the first aspect, the method further includes: The radio frequency apparatus receives first information from the network control apparatus, where the first information indicates that the first module does not carry uplink data on the first time resource, and/or the first information indicates that the first module does not carry downlink data on the first time resource. That the radio frequency apparatus turns off the first module at a first moment corresponding to the first time resource includes: The radio frequency apparatus turns off, at the first moment corresponding to the first time resource, the first module configured to process the uplink data; and/or the radio frequency apparatus turns off, at the first moment corresponding to the first time resource, the first module configured to process the downlink data.

It should be understood that the first module may be configured to independently process the uplink data, or the first module may be configured to independently process the downlink data, or the first module may be configured to process the uplink data and downlink data. When the first information indicates that the first module does not carry the uplink data on the first time resource, the radio frequency apparatus may turn off, at the first moment, the first module configured to independently process the uplink data. When the first information indicates that the first module does not carry the downlink data on the first time resource, the radio frequency apparatus may turn off, at the first moment, the first module configured to independently process the downlink data. When the first information indicates that the first module carries neither the uplink data nor the downlink data on the first time resource, the radio frequency apparatus may turn off, at the first moment, the first module configured to independently process the downlink data, the first module configured to independently process the downlink data, and the first module configured to process the uplink data and the downlink data.

Therefore, in this application, the network control apparatus may notify the radio frequency apparatus of a module that is configured to process the uplink data and that is to be turned off, a module that is configured to process the downlink data and that is to be turned off, or a module that is configured to process the uplink data and downlink data and that is to be turned off, so that the radio frequency apparatus may turn off a module that does not carry data, to improve flexibility of turning-off control, and further effectively reduce losses of a communication system.

With reference to the first aspect, in some implementations of the first aspect, the method further includes: The radio frequency apparatus receives second information from the network control apparatus, where the second information indicates that the first module corresponding to a radio frequency channel does not carry data on the first time resource. That the radio frequency apparatus turns off the first module at a first moment corresponding to the first time resource includes: The radio frequency apparatus turns off, at the first moment, the first module corresponding to the radio frequency channel.

Therefore, in this application, and the network control apparatus may notify, by sending the second information to the radio frequency apparatus, the first module does not carry data on a specific radio frequency channel or specific radio frequency channels, so that the radio frequency apparatus may turn off the first module corresponding to a radio frequency channel that does not carry data. This improves turning-off flexibility and further effectively reduces losses of a communication system.

With reference to the first aspect, in some implementations of the first aspect, the method further includes: The radio frequency apparatus receives first information and second information from the network control apparatus, where the first information indicates that the first module does not carry uplink data on the first time resource, and/or the first information indicates that the first module does not carry downlink data on the first time resource; and the second information indicates that the first module corresponding to a radio frequency channel does not carry data on the first time resource. That the radio frequency apparatus turns off the first module at a first moment corresponding to the first time resource includes: The radio frequency apparatus turns off, at the first moment, the first module that is configured to process the uplink data and that corresponds to the radio frequency channel; and/or the radio frequency apparatus turns off, at the first moment, the first module that is configured to process the downlink data and that corresponds to the radio frequency channel.

Therefore, in this application, the network control apparatus may notify the radio frequency apparatus of a specific radio frequency channel or specific radio frequency channels on which the radio frequency apparatus turns off a module configured to process the uplink data, a module configured to process the downlink data, or a module configured to process the uplink data and downlink data, so that the radio frequency apparatus may turn off a module that does not carry data. This improves flexibility of turning-off control and further effectively reduces losses of a communication system.

With reference to the first aspect, in some implementations of the first aspect, the indication information is status indication information, and the status indication information indicates whether the first module carries data on the first resource; and/or the indication information is turning-off indication information, and the turning-off indication information indicates whether the radio frequency apparatus turns off the first module.

Therefore, in this application, the network control apparatus may indicate, in an explicit indication manner, the radio frequency apparatus to turn off the first module, and may also indicate, in an implicit indication manner, the radio frequency apparatus to turn off the first module. This improves flexibility of a communication system.

With reference to the first aspect, in some implementations of the first aspect, the first time resource is any one of the following resources: a subframe resource, a symbol resource, and a slot resource.

Therefore, in this application, the network control apparatus may indicate, at a granularity of a subframe, a symbol, or a slot, the radio frequency apparatus to turn off the first module, to improve flexibility of a communication system.

With reference to the first aspect, in some implementations of the first aspect, the first module includes at least one of the following modules: a baseband processing module, an intermediate frequency processing module, a radio frequency processing module, and a power module.

Alternatively, the first module may include at least one of the following components: all or some components in the baseband processing module, all or some components in the intermediate frequency processing module, all or some components in the radio frequency processing module, and all or some components in the power module.

According to a second aspect, an information transmission method is provided. The method may be performed by a radio frequency apparatus or a chip in a radio frequency apparatus. The method includes: The radio frequency apparatus receives indication information from a network control apparatus, where the indication information indicates a usage status of a first resource, and the usage status is a status of data carried on the first resource; and the radio frequency apparatus adjusts power of the radio frequency apparatus based on the usage status.

Therefore, in this application, the network control apparatus may send, to the radio frequency apparatus, the indication information indicating the usage status of the first resource, and the radio frequency apparatus adjusts the power of the radio frequency apparatus based on the usage status, so that a power level of the radio frequency apparatus may match the status of the data carried on the first resource. This reduces losses of a communication system.

With reference to the second aspect, in a possible implementation, the first resource is a first frequency domain resource, and the status of the data carried on the first resource includes: whether the first frequency domain resource carries data, or utilization of the first frequency domain resource, or a bandwidth of a frequency domain resource of the first frequency domain resource on which data is carried, or a bandwidth of a frequency domain resource of the first frequency domain resource on which data is not carried, or an occupation variation of a bandwidth of data carried on the first frequency domain resource.

Optionally, the status of the data carried on the first resource indicates the bandwidth of the data carried on the first frequency domain resource.

In this application, the network control apparatus may use different parameter quantities, for example, whether to carry data, utilization, a bandwidth, and an occupation variation, to indicate a status of data carried on the first frequency domain resource. The radio frequency apparatus adjusts the power of the radio frequency apparatus based on the received parameter quantities, to improve flexibility of information transmission in a communication system.

With reference to the second aspect, in a possible implementation, the method further includes: The radio frequency apparatus receives third information from the network control apparatus, where the third information indicates that the usage status is a status that the first resource carries uplink data, and/or the third information indicate that the usage status is a status that the first resource carries downlink data. That the radio frequency apparatus adjusts power of the radio frequency apparatus based on the usage status includes: The radio frequency apparatus adjusts, based on the usage status, power that is in the radio frequency apparatus and that is used to process the uplink data; and/or the radio frequency apparatus adjusts, based on the usage status, power that is in the radio frequency apparatus and that is used to process the downlink data.

It should be understood that, when the third information indicates that the usage status is the state that the first resource carries the uplink data, the radio frequency apparatus may adjust, based on the usage status, the power used to process the uplink data; when the third information indicates that the usage status is the state that the first resource carries the downlink data, the radio frequency apparatus may adjust, based on the usage status, the power used to process the downlink data; and when the third information indicates that the usage status is a status that the first resource carries the uplink data and downlink data, the radio frequency apparatus may adjust, based on the usage status, power used to process the uplink data and downlink data.

Therefore, in this application, the network control apparatus may flexibly indicate, based on the usage status, specific power to be adjusted by the radio frequency apparatus, to improve flexibility of information transmission in a communication system.

With reference to the second aspect, in a possible implementation, that the radio frequency apparatus adjusts power of the radio frequency apparatus based on the usage status includes: The radio frequency apparatus adjusts power of at least one of the following modules in the radio frequency apparatus based on the usage status: a baseband processing module, an intermediate frequency processing module, a radio frequency processing module, and a power module.

Alternatively, adjusting the power of the radio frequency apparatus may be adjusting power of at least one of the following components in the radio frequency apparatus: all or some components in the baseband processing module, all or some components in the intermediate frequency processing module, all or some components in the radio frequency processing module, and all or some components in the power module.

With reference to the second aspect, in a possible implementation, that the radio frequency apparatus adjusts power of the radio frequency apparatus based on the usage status includes: The radio frequency apparatus determines the power of the radio frequency apparatus based on the bandwidth of the data carried on the first frequency domain resource.

The radio frequency apparatus adjusts the power of the radio frequency apparatus, so that the power of the radio frequency apparatus corresponds to the bandwidth of the data carried on the first frequency domain resource.

It should be understood that the network control apparatus may explicitly notify the radio frequency apparatus of the bandwidth of the data carried on the first frequency domain resource, or may implicitly notify the radio frequency apparatus of the bandwidth of the data carried on the first frequency domain resource based on parameters such as utilization, an occupation variation, and a bandwidth of data that is not carried.

Therefore, in this application, the power of the radio frequency apparatus may be adjusted based on the bandwidth of the data carried on the first frequency domain resource, to improve power adjustment reliability.

According to a third aspect, an information transmission method is provided. The method may be performed by a network control apparatus or a chip of a network control apparatus. The method includes: The network control apparatus determines indication information, where the indication information indicates a usage status of a first resource, and the usage status is whether a first module carries data on the first resource; and the network control apparatus sends the indication information to a radio frequency apparatus.

Therefore, in this application, the network control apparatus may send, to the radio frequency apparatus, the indication information indicating the usage status of the first resource. When the first module does not carry data on the first resource, the radio frequency apparatus may turn off the first module, so that losses of a communication system can be effectively reduced.

With reference to the third aspect, in some implementations of the third aspect, the first resource is a first time resource.

With reference to the third aspect, in some implementations of the third aspect, the method further includes: The network control apparatus sends first information to the radio frequency apparatus, where the first information indicates that the first module does not carry uplink data on the first time resource, and/or the first information indicates that the first module does not carry downlink data on the first time resource. The first information is further used for turning-off of the first module that processes the uplink data, and/or the first information is further used for turning-off of the first module that processes the downlink data.

With reference to the third aspect, in some implementations of the third aspect, the method further includes: The network control apparatus sends second information to the radio frequency apparatus, where the second information indicates that the first module corresponding to a radio frequency channel does not carry data on the first time resource, and the second information is used for turning-off of the first module corresponding to the radio frequency channel.

With reference to the third aspect, in some implementations of the third aspect, the method further includes: The network control apparatus sends first information and second information to the radio frequency apparatus. The first information indicates that the first module does not carry uplink data on the first time resource, and/or the first information indicates that the first module does not carry downlink data on the first time resource; and the second information indicates that the first module corresponding to a radio frequency channel does not carry data on the first time resource. The first information and the second information are used for turning-off of the first module that is configured to process the uplink data and that corresponds to the radio frequency channel, and/or the first information and the second information are used for turning-off of the first module that is configured to process the downlink data and that corresponds to the radio frequency channel.

With reference to the third aspect, in some implementations of the third aspect, the indication information is status indication information, where the status indication information indicates whether the first module carries data on the first resource; and/or the indication information is turning-off indication information, where the turning-off indication information indicates whether the radio frequency apparatus turns off the first module.

With reference to the third aspect, in some implementations of the third aspect, the first time resource is any one of the following resources: a subframe resource, a symbol resource, and a slot resource.

With reference to the third aspect, in some implementations of the third aspect, the first module includes at least one of the following modules: a baseband processing module, an intermediate frequency processing module, a radio frequency processing module, and a power module.

According to a fourth aspect, an information transmission method is provided. The method may be performed by a network control apparatus or a chip of a network control apparatus. The method includes: The network control apparatus determines indication information, where the indication information indicates a usage status of a first resource, and the usage status is a status of data carried on the first resource; and the network control apparatus sends the indication information to a radio frequency apparatus.

With reference to the fourth aspect, in some implementations of the fourth aspect, the first resource is a first frequency domain resource, and the status of the data carried on the first resource includes: whether the first frequency domain resource carries data, or utilization of the first frequency domain resource, or a bandwidth of a frequency domain resource of the first frequency domain resource on which data is carried, or a bandwidth of a frequency domain resource of the first frequency domain resource on which data is not carried, or an occupation variation of a bandwidth of data carried on the first frequency domain resource.

With reference to the fourth aspect, in some implementations of the fourth aspect, the method further includes: The network control apparatus sends third information to the radio frequency apparatus. The third information indicates that the usage status is a status that the first resource carries uplink data, and/or the third information indicates that the usage status is a status that the first resource carries downlink data. The third information is further used to adjust power for processing the uplink data, and/or the third information is further used to adjust power for processing the downlink data.

Therefore, in this application, the network control apparatus may send, to the radio frequency apparatus, the indication information indicating the usage status of the first resource. When the first module does not carry data on the first resource, the radio frequency apparatus may turn off the first module, so that losses of a communication system can be effectively reduced.

According to a fifth aspect, a radio frequency apparatus is provided. The radio frequency apparatus includes a transceiver unit and a processing unit. The transceiver unit is configured to receive indication information from a network control apparatus, the indication information indicates a usage status of a first resource, and the usage status is whether a first module carries data on the first resource. The processing unit is configured to: when the usage status is that the first module does not carry data on the first resource, turn off, for the radio frequency apparatus, the first module based on the usage status.

Therefore, in this application, the network control apparatus may send, to the radio frequency apparatus, the indication information indicating the usage status of the first resource. When the first module does not carry data on the first resource, the radio frequency apparatus may turn off the first module, so that losses of a communication system can be effectively reduced.

With reference to the fifth aspect, in some implementations of the fifth aspect, the first resource includes a first time resource, and the processing unit is specifically configured to: when the usage status is that the first module does not carry data on the first time resource, turn off the first module at a first moment corresponding to the first time resource.

With reference to the fifth aspect, in some implementations of the fifth aspect, the transceiver unit is further configured to receive first information from the network control apparatus. The first information indicates that the first module does not carry uplink data on the first time resource, and/or the first information indicates that the first module does not carry downlink data on the first time resource. The processing unit is specifically configured to turn off, at the first moment corresponding to the first time resource, the first module configured to process the uplink data; and/or the processing unit is specifically configured to turn off, at the first moment corresponding to the first time resource, the first module configured to process the downlink data.

With reference to the fifth aspect, in some implementations of the fifth aspect, the transceiver unit is further configured to receive second information from the network control apparatus, where the second information indicates that the first module corresponding to a radio frequency channel does not carry data on the first time resource; and the processing unit is specifically configured to turn off, at the first moment, the first module corresponding to the radio frequency channel.

With reference to the fifth aspect, in some implementations of the fifth aspect, the transceiver unit is further configured to receive first information and second information from the network control apparatus. The first information indicates that the first module does not carry uplink data on the first time resource, and/or the first information indicates that the first module does not carry downlink data on the first time resource. The second information indicates that the first module corresponding to a radio frequency channel does not carry data on the first time resource. The processing unit is specifically configured to: turn off, at the first moment, the first module that is configured to process the uplink data and that corresponds to the radio frequency channel; and/or turn off, at the first moment, the first module that is configured to process the downlink data and that corresponds to the radio frequency channel.

With reference to the fifth aspect, in some implementations of the fifth aspect, the indication information is status indication information, where the status indication information indicates whether the first module carries data on the first resource; and/or the indication information is turning-off indication information, where the turning-off indication information indicates whether the radio frequency apparatus turns off the first module.

With reference to the fifth aspect, in some implementations of the fifth aspect, the first time resource is any one of the following resources: a subframe resource, a symbol resource, and a slot resource.

With reference to the fifth aspect, in some implementations of the fifth aspect, the first module includes at least one of the following modules: a baseband processing module, an intermediate frequency processing module, a radio frequency processing module, and a power module.

According to a sixth aspect, a network control apparatus is provided. The apparatus includes a processing unit and a transceiver unit. The processing unit is configured to determine indication information, where the indication information indicates a usage status of a first resource, and the usage status is whether a first module carries data on the first resource. The transceiver unit is configured to send the indication information to a radio frequency apparatus.

Therefore, in this application, the network control apparatus may send, to the radio frequency apparatus, the indication information indicating the usage status of the first resource. When the first module does not carry data on the first resource, the radio frequency apparatus may turn off the first module, so that losses of a communication system can be effectively reduced.

With reference to the sixth aspect, in some implementations of the sixth aspect, the first resource is a first time resource.

With reference to the sixth aspect, in some implementations of the sixth aspect, the transceiver unit is further configured to send first information to the radio frequency apparatus, where the first information indicates that the first module does not carry uplink data on the first time resource, and/or the first information indicates that the first module does not carry downlink data on the first time resource. The first information is further used for turning-off of the first module that processes the uplink data, and/or the first information is further used for turning-off of the first module that processes the downlink data.

With reference to the sixth aspect, in some implementations of the sixth aspect, the transceiver unit is further configured to send second information, where the second information indicates that the first module corresponding to a radio frequency channel does not carry data on the first time resource, and the second information is used for turning-off of the first module corresponding to the radio frequency channel.

With reference to the sixth aspect, in some implementations of the sixth aspect, the transceiver unit is further configured to send first information and second information to the radio frequency apparatus. The first information indicates that the first module does not carry uplink data on the first time resource, and/or the first information indicates that the first module does not carry downlink data on the first time resource; and the second information indicates that the first module corresponding to a radio frequency channel does not carry data on the first time resource. The first information and the second information are used for turning-off of the first module that is configured to process the uplink data and that corresponds to the radio frequency channel, and/or the first information and the second information are used for turning-off of the first module that is configured to process the downlink data and that corresponds to the radio frequency channel.

With reference to the sixth aspect, in some implementations of the sixth aspect, the indication information is status indication information, where the status indication information indicates whether the first module carries data on the first resource; and/or the indication information is turning-off indication information, where the turning-off indication information indicates whether the radio frequency apparatus turns off the first module.

With reference to the sixth aspect, in some implementations of the sixth aspect, the first time resource is any one of the following resources: a subframe resource, a symbol resource, and a slot resource.

With reference to the sixth aspect, in some implementations of the sixth aspect, the first module includes at least one of the following modules: a baseband processing module, an intermediate frequency processing module, a radio frequency processing module, and a power module.

According to a seventh aspect, a radio frequency apparatus is provided. The apparatus includes a transceiver unit and a processing unit. The transceiver unit is configured to receive indication information from a network control apparatus, where the indication information indicates a usage status of a first resource, and the usage status is a status of data carried on the first resource. The processing unit is configured to adjust power of the radio frequency apparatus based on the usage status.

Therefore, in this application, the network control apparatus may send, to the radio frequency apparatus, the indication information indicating the usage status of the first resource, and the radio frequency apparatus adjusts the power of the radio frequency apparatus based on the usage status, so that a power level of the radio frequency apparatus may match the status of the data carried on the first resource. This reduces losses of a communication system.

With reference to the seventh aspect, in some implementations of the seventh aspect, the first resource is a first frequency domain resource, and the status of the data carried on the first resource includes: whether the first frequency domain resource carries data, or utilization of the first frequency domain resource, or a bandwidth of a frequency domain resource of the first frequency domain resource on which data is carried, or a bandwidth of a frequency domain resource of the first frequency domain resource on which data is not carried, or an occupation variation of a bandwidth of data carried on the first frequency domain resource.

With reference to the seventh aspect, in some implementations of the seventh aspect, the transceiver unit is configured to receive third information from the network control apparatus, where the third information indicates that the usage status is a status that the first resource carries uplink data, and/or the third information indicate that the usage status is a status that the first resource carries downlink data. The processing unit is specifically configured to adjust, based on the usage status, power that is in the radio frequency apparatus and that is used to process the uplink data; and/or the processing unit is specifically configured to adjust, based on the usage status, power that is in the radio frequency apparatus and that is used to process the downlink data.

With reference to the seventh aspect, in some implementations of the seventh aspect, the processing unit is specifically configured to adjust, based on the usage status, power of at least one of the following modules in the radio frequency apparatus: a baseband processing module, an intermediate frequency processing module, a radio frequency processing module, and a power module.

With reference to the seventh aspect, in some implementations of the seventh aspect, the processing unit is specifically configured to determine the power of the radio frequency apparatus based on the bandwidth of the data carried on the first frequency domain resource.

According to an eighth aspect, a network control apparatus is provided. The apparatus includes a processing unit and a transceiver unit. The processing unit is configured to determine indication information, where the indication information indicates a usage status of a first resource, and the usage status is whether a first module carries data on the first resource. The transceiver unit is configured to send the indication information to a radio frequency apparatus.

Therefore, in this application, the network control apparatus may send, to the radio frequency apparatus, the indication information indicating the usage status of the first resource, and the radio frequency apparatus adjusts the power of the radio frequency apparatus based on the usage status, so that a power level of the radio frequency apparatus may match the status of data carried on the first resource. This reduces losses of a communication system.

With reference to the eighth aspect, in some implementations of the eighth aspect, the first resource is a first time resource.

With reference to the eighth aspect, in some implementations of the eighth aspect, the transceiver unit is further configured to send first information to the radio frequency apparatus, where the first information indicates that the first module does not carry uplink data on the first time resource, and/or the first information indicates that the first module does not carry downlink data on the first time resource. The first information is further used for turning-off of the first module that processes the uplink data, and/or the first information is further used for turning-off of the first module that processes the downlink data.

According to a ninth aspect, an information transmission method is provided. The method may be applied to a system including a network control apparatus and a radio frequency apparatus. The method includes: The network control apparatus determines indication information, where the indication information indicates a usage status of a first resource, and the usage status is whether a first module carries data on the first resource; the network control apparatus sends the indication information to the radio frequency apparatus; and the radio frequency apparatus turns off the first module based on the usage status when the usage status is that the first module does not carry data on the first resource.

Therefore, in this application, the network control apparatus may send, to the radio frequency apparatus, the indication information indicating the usage status of the first resource. When the first module does not carry data on the first resource, the radio frequency apparatus may turn off the first module, so that losses of a communication system can be effectively reduced.

With reference to the ninth aspect, in some implementations of the ninth aspect, the first resource is a first time resource; and that the radio frequency apparatus turns off the first module based on the usage status when the usage status is that the first module does not carry data on the first resource includes: The radio frequency apparatus turns off the first module at a first moment corresponding to the first time resource when the usage status is that the first module does not carry data on the first time resource.

With reference to the ninth aspect, in some implementations of the ninth aspect, the method further includes: The network control apparatus sends first information to the radio frequency apparatus, where the first information indicates that the first module does not carry uplink data on the first time resource, and/or the first information indicates that the first module does not carry downlink data on the first time resource. That the radio frequency apparatus turns off the first module at a first moment corresponding to the first time resource includes: The radio frequency apparatus turns off, at the first moment corresponding to the first time resource, the first module configured to process the uplink data; and/or the radio frequency apparatus turns off, at the first moment corresponding to the first time resource, the first module configured to process the downlink data.

With reference to the ninth aspect, in some implementations of the ninth aspect, the method further includes: The network control apparatus sends second information to the radio frequency apparatus, where the second information indicates that the first module corresponding to a radio frequency channel does not carry data on the first time resource. That the radio frequency apparatus turns off the first module at a first moment corresponding to the first time resource includes: The radio frequency apparatus turns off, at the first moment, the first module corresponding to the radio frequency channel.

With reference to the ninth aspect, in some implementations of the ninth aspect, the method further includes: The network control apparatus sends first information and second information to the radio frequency apparatus, where the first information indicates that the first module does not carry uplink data on the first time resource, and/or the first information indicates that the first module does not carry downlink data on the first time resource; and the second information indicates that the first module corresponding to a radio frequency channel does not carry data on the first time resource. That the radio frequency apparatus turns off the first module at a first moment corresponding to the first time resource includes: The radio frequency apparatus turns off, at the first moment, the first module that is configured to process the uplink data and that corresponds to the radio frequency channel; and/or the radio frequency apparatus turns off, at the first moment, the first module that is configured to process the downlink data and that corresponds to the radio frequency channel.

With reference to the ninth aspect, in some implementations of the ninth aspect, the indication information is status indication information, where the status indication information indicates whether the first module carries data on the first resource; and/or the indication information is turning-off indication information, where the turning-off indication information indicates whether the radio frequency apparatus turns off the first module.

With reference to the ninth aspect, in some implementations of the ninth aspect, the first time resource is any one of the following resources: a subframe resource, a symbol resource, and a slot resource.

With reference to the ninth aspect, in some implementations of the ninth aspect, the first module includes at least one of the following modules: a baseband processing module, an intermediate frequency processing module, a radio frequency processing module, and a power module.

According to a tenth aspect, an information transmission method is provided. The method may be applied to a system including a network control apparatus and a radio frequency apparatus, and the method includes: The network control apparatus determines indication information, where the indication information indicates a usage status of a first resource, and the usage status is a status of data carried on the first resource; the network control apparatus sends the indication information to the radio frequency apparatus; and the radio frequency apparatus adjusts power of the radio frequency apparatus based on the usage status.

Therefore, in this application, the network control apparatus may send, to the radio frequency apparatus, the indication information indicating the usage status of the first resource, and the radio frequency apparatus adjusts the power of the radio frequency apparatus based on the usage status, so that a power level of the radio frequency apparatus may match the status of the data carried on the first resource. This reduces losses of a communication system.

With reference to the tenth aspect, in some implementations of the tenth aspect, the first resource is a first frequency domain resource, and the status of the data carried on the first resource includes: whether the first frequency domain resource carries data, or utilization of the first frequency domain resource, or a bandwidth of a frequency domain resource of the first frequency domain resource on which data is carried, or a bandwidth of a frequency domain resource of the first frequency domain resource on which data is not carried, or an occupation variation of a bandwidth of data carried on the first frequency domain resource.

With reference to the tenth aspect, in some implementations of the tenth aspect, the network control apparatus sends third information to the radio frequency apparatus. The third information indicates that the usage status is a status that the first resource carries uplink data, and/or the third information indicate that the usage status is a status that the first resource carries downlink data. That the radio frequency apparatus adjusts power of the radio frequency apparatus based on the usage status includes: The radio frequency apparatus adjusts, based on the usage status, power that is in the radio frequency apparatus and that is used to process the uplink data; and/or the radio frequency apparatus adjusts, based on the usage status, power that is in the radio frequency apparatus and that is used to process the downlink data.

With reference to the tenth aspect, in some implementations of the tenth aspect, that the radio frequency apparatus adjusts power of the radio frequency apparatus based on the usage status includes: The radio frequency apparatus adjusts power of at least one of the following modules in the radio frequency apparatus based on the usage status: a baseband processing module, an intermediate frequency processing module, a radio frequency processing module, and a power module.

With reference to the tenth aspect, in some implementations of the tenth aspect, that the radio frequency apparatus adjusts power of the radio frequency apparatus based on the usage status includes: The radio frequency apparatus determines the power of the radio frequency apparatus based on the bandwidth of the data carried on the first frequency domain resource. The radio frequency apparatus adjusts the power of the radio frequency apparatus, so that the power of the radio frequency apparatus corresponds to the bandwidth of the data carried on the first frequency domain resource.

According to an eleventh aspect, an information transmission method is provided, and the method may be performed by a radio frequency apparatus or a chip in a radio frequency apparatus. The method includes: The radio frequency apparatus receives indication information from a network control apparatus, where the indication information indicates the radio frequency apparatus to turn off a first module at a first moment, and the first module does not carry first data on a first time resource corresponding to the first moment; and the radio frequency apparatus turns off the first module at the first moment.

Therefore, in this application, when the first time resource is not occupied, and the first module does not carry data on the first time resource, the network control apparatus may indicate the radio frequency apparatus to turn off the first module, so that losses of a communication system can be effectively reduced.

According to a twelfth aspect, a communication apparatus is provided. The apparatus may include a processing unit, a sending unit, and a receiving unit. Optionally, the sending unit and the receiving unit may alternatively be a transceiver unit.

When the apparatus is a radio frequency apparatus, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, so that the communication apparatus performs any method in the first aspect or the second aspect. When the apparatus is a chip in a communication apparatus, the processing unit may be a processor, and the sending unit and the receiving unit may be an input/output interface, a pin, a circuit, or the like. The processing unit executes instructions stored in a storage unit, so that the chip performs any method in the first aspect or the second aspect. The storage unit is configured to store the instructions. The storage unit may be a storage unit (for example, a register or a cache) in the chip, or may be a storage unit (for example, a read-only memory or a random access memory) that is in the communication apparatus and that is located outside the chip.

When the apparatus is a network control apparatus, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, so that the communication apparatus performs any method in the third aspect or the fourth aspect. When the apparatus is a chip in a communication apparatus, the processing unit may be a processor, and the sending unit and the receiving unit may be an input/output interface, a pin, a circuit, or the like. The processing unit executes instructions stored in a storage unit, so that the chip performs any method in the third aspect or the fourth aspect. When the apparatus is a chip in a communication apparatus, the processing unit may be a processor, and the sending unit and the receiving unit may be an input/output interface, a pin, a circuit, or the like. The processing unit executes instructions stored in a storage unit, so that the chip performs any method in the third aspect or the fourth aspect.

According to a thirteenth aspect, a communication apparatus is provided, including a processor and an interface circuit. The interface circuit is configured to: receive a signal from another communication apparatus different from the communication apparatus, and transmit the signal to the processor, or send a signal from the processor to another communication apparatus different from the communication apparatus. The processor is configured to implement any method in the first aspect to the fourth aspect by using a logic circuit or executing a code instruction.

According to a fourteenth aspect, a computer-readable storage medium is provided. The computer-readable storage medium stores a computer program or instructions, and when the computer program or the instructions are executed, any method in the first aspect to the fourth aspect is implemented.

According to a fifteenth aspect, a computer program product including instructions is provided. When the instructions are run, any method in the first aspect to the fourth aspect is implemented.

According to a sixteenth aspect, a computer program is provided. The computer program includes code or instructions, and when the code or the instructions are run, the method in any possible implementation of the first aspect to the fourth aspect is implemented.

According to a seventeenth aspect, a chip system is provided. The chip system includes a processor, and may further include a memory, configured to implement at least one method described in the first aspect to the fourth aspect. The chip system may include a chip, or may include a chip and another discrete component.

According to an eighteenth aspect, a communication system is provided. The system includes the apparatus according to any one of the fifth aspect and the sixth aspect, or the system includes the apparatus according to any one of the seventh aspect and the eighth aspect.

In some implementations, a radio frequency apparatus is a remote radio unit RRU or an active antenna processing unit AAU, and a network control apparatus is a baseband unit BBU.

### BRIEF DESCRIPTION OF DRAWINGS

FIG. 1 is a diagram of a structure of a communication system to which an embodiment of this application is applicable;
FIG. 2 is a diagram of structures of different communication interfaces to which an embodiment of this application is applicable;
FIG. 3 is a schematic flowchart of an information transmission method according to an embodiment of this application;
FIG. 4 is a diagram of controlling turning-off and turning-on according to an embodiment of this application;
FIG. 5 is a schematic flowchart of another information transmission method according to an embodiment of this application;
FIG. 6 is a schematic flowchart of still another information transmission method according to an embodiment of this application; and
FIG. 7 and FIG. 8 are diagrams of structures of possible communication apparatuses according to embodiments of this application.

### DESCRIPTION OF EMBODIMENTS

The following describes technical solutions in this application with reference to the accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a 6th generation (6th generation, 6G) system, or a future communication system. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine to machine (machine to machine, M2M) communication system, an Internet of things (Internet of things, IoT) communication system, a vehicle-to-everything (vehicle-to-everything, V2X) communication system, an uncrewed aerial vehicle (unmanned aerial vehicle, UAV) communication system, or another communication system.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

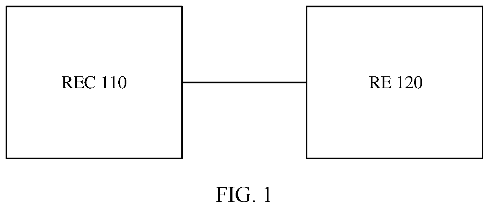

For ease of understanding of embodiments of this application, an application scenario of embodiments of this application is first described in detail with reference to FIG. 1.

FIG. 1 is a diagram of a structure of a communication system to which an embodiment of this application is applicable. First, apparatuses that may be used in the communication system are described.
1. A radio equipment controller (radio equipment controller, REC) 110 may be configured to process a digital baseband signal, and control and manage radio equipment. In some communication systems, the REC 110 may be a baseband unit (baseband unit, BBU), and mainly implements a function of processing a baseband signal. In a future communication system or another communication system, the REC 110 may have another name, or may have another function. This is not particularly limited in this application.

In this application, the REC 110 may include a scheduler. The scheduler may allocate time-frequency resources to uplink data or downlink data, and transmit the data using the allocated time-frequency resources.

2. Radio frequency equipment (radio equipment, RE) 120 may be configured to implement functions such as intermediate frequency processing, radio frequency processing, and duplexing of a signal. In some communication systems, the RE 120 may be a remote radio unit (remote radio unit, RRU) or an active antenna unit (active antenna unit, AAU). In a future communication system or another communication system, the RE 120 may have another name. This is not particularly limited in this application.

In addition, a communication interface between the REC 110 and the RE 120 may be referred to as a fronthaul interface. The fronthaul interface may be a common public radio interface (common public radio interface, CPRI), an eCPRI (enhanced CPRI, eCPRI) interface, or another interface that is defined in the future and that is configured to connect the BBU 110 and the RRU 120. This is not particularly limited in this application.

When different fronthaul interfaces are used between the REC and the RE, the REC and the RE may have different function division manners.

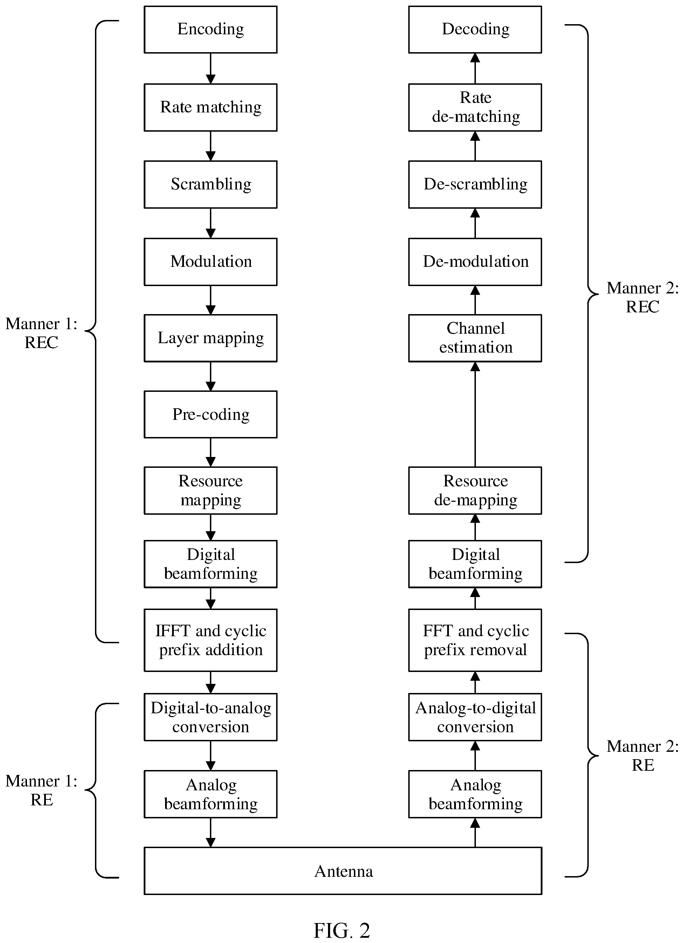

FIG. 2 is a diagram of different communication interfaces to which an embodiment of this application is applicable. A CPRIinterface generally adopts a division manner 1. In a downlink direction of the RE, the RE has functions of analog beamforming (analog beamforming) and digital-to-analog (digital-to-analog) conversion. In an uplink direction of the RE, the RE has functions of analog beamforming (analog beamforming) and analog-to-digital (analog-to-digital) conversion. In a downlink direction of the REC, the REC has functions of encoding (coding), rate matching (rate matching), scrambling (scrambling), modulation (modulation), layer mapping (layer mapping), pre-coding (pre-coding), resource mapping (resource mapping), digital beamforming (digital beamforming), and inverse fast Fourier transform (inverse fast Fourier transformation, IFFT) and cyclic prefix addition (cyclic prefix addition). In an uplink direction of the REC, the REC has functions of decoding (decoding) and rate de-matching (rate de-matching), de-scrambling (de-scrambling), de-modulation (de-modulation), channel estimation (channel estimation)/equalization (equalization), inverse discrete Fourier transform (inverse discrete Fourier transform, IDFT), resource de-mapping (resource de-mapping), digital beamforming (digital beamforming), and fast Fourier transform (fast Fourier transform, FFT) and cyclic prefix removal (cyclic prefix removal).

An eCPRI interface may adopt a division manner 2. Compared with the manner 1, the functions of IFFT and cyclic prefix addition in the downlink direction are moved from the REC to the RE. Similarly, the functions of FFT and cyclic prefix removal in the uplink direction are moved from the REC to the RE.

It should be understood that the eCPRI interface may use another division manner, or another interface may use another division manner. Embodiments of this application are applicable to apparatuses or communication systems in various division manners. This is not particularly limited in this application.

It should be understood that the foregoing functions may have an independent apparatus or chip, or may be integrated into one or more apparatuses or chips. For example, in the RE, the functions responsible for baseband processing (for example, FFT and IFFT) may be integrated into a baseband processing module, the functions responsible for intermediate frequency processing (for example, digital-to-analog conversion and analog-to-digital conversion) may be integrated into an intermediate frequency processing module, and the functions responsible for converting a radio signal into a specific radio signal waveform may be integrated into a radio frequency processing module. The radio frequency processing module may include a radio frequency chip, and the radio frequency chip may include components such as a power amplifier (power amplifier, PA), a radio frequency chip (radio on chip, ROC), a low noise amplifier (low noise amplifier, LNA), and a down-converter. In addition, the RE and the REC may further include another functional modules. For example, the RE may further include a power module responsible for supplying power. The power module may be independently deployed to supply power to all or some other modules, or may be deployed in each module to supply power to each module. This is not specifically limited in this application.

In addition, when the RE includes a plurality of radio frequency channels, each radio frequency channel may have an independent intermediate frequency processing module, radio frequency processing module, and power module. In addition, each module may further include a module configured to process uplink data and a module configured to process downlink data. For example, in the baseband processing module, an FFT module is configured to process the uplink data, and an IFFT module is configured to process the downlink data.

When a network control apparatus schedules and manages resources, some resources do not carry data, but a radio frequency apparatus still generates a corresponding static loss. Currently, when the radio frequency apparatus receives the downlink data from the network control apparatus, the radio frequency apparatus may implement symbol power saving by determining in real time whether a symbol carries data, to reduce losses of a communication system. However, a requirement for energy saving and environmental protection still cannot be met. This application provides an information transmission method, to effectively reduce losses of the communication system.

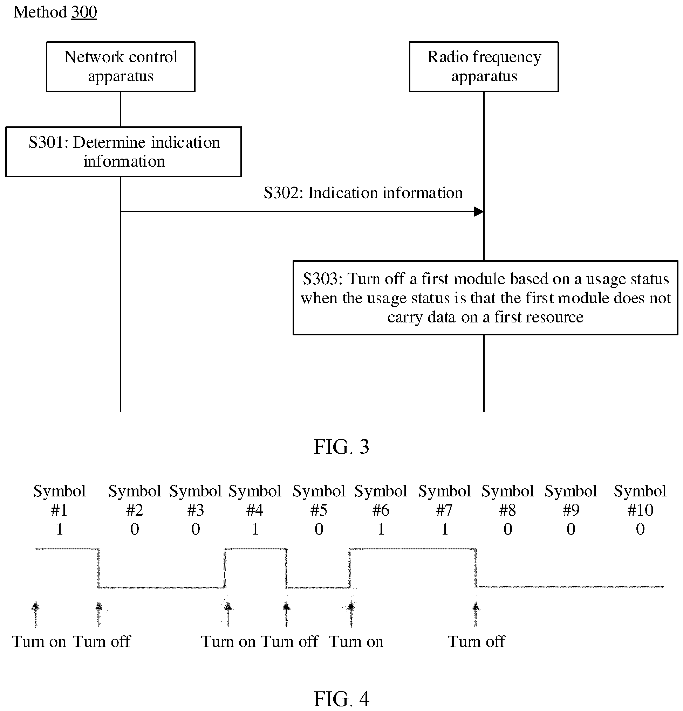

FIG. 3 is a schematic flowchart of an information transmission method 300 according to an embodiment of this application.

S301: A network control apparatus determines indication information, where the indication information indicates a usage status of a first resource.

The usage status is whether a first module carries data on the first resource.

The first module is all or some modules, or all or some components described in the foregoing radio frequency apparatus. The radio frequency apparatus may be the RE 120 shown in FIG. 1, and the network control apparatus may be the REC 110 shown in FIG. 1.

Optionally, the first module includes at least one of the following modules: a baseband processing module, an intermediate frequency processing module, a radio frequency processing module, and a power module.

Alternatively, the first module may include at least one of the following components: all or some components in the baseband processing module, all or some components in the intermediate frequency processing module, all or some components in the radio frequency processing module, and all or some components in the power module.

For example, the first module may include but is not limited to a PA, an analog-to-digital or digital-to-analog converter, an ROC, an LNA, a down-converter, and the like. The PA, the digital-to-analog converter, and the ROC may be configured to process downlink data, and the LNA, the down-converter, and the analog-to-digital converter may be configured to process uplink data.

It should be understood that the first module in this application may further include another apparatus and device that may be configured to process data. This is not particularly limited in this application.

When the first module does not carry the data on the first resource, it may be understood that the first resource is idle, and the first module does not carry the data on the first resource. That the first module does not carry data on the first resource may be understood as that the first resource does not carry service data and/or does not carry control signaling. When the first module carries data on the first resource, it may be understood that the first resource is busy, and the first resource carries service data and/or control signaling.

In a possible implementation, the first resource includes a first time resource.

The first time resource may be a subframe resource, a slot resource, or a symbol resource.

For example, a communication system may perform scheduling by using a subframe, a slot, or a symbol as a time unit. The first time resource may be one or more subframes, one or more slots, or one or more symbols. The indication information may be indicated by one bit. For example, when the first module does not carry data on a symbol, a bit is set to "0", and when the first module carries data on a symbol, the bit is set to "1".

It should be understood that the indication information may be status indication information, and the status indication information indicates whether the first module carries data on the first resource; and/or the indication information is turning-off indication information, and the turning-off indication information indicates whether the radio frequency apparatus turns off the first module. Further, the network control apparatus may indicate, in an explicit indication manner, the radio frequency apparatus to turn off the first module, and may also indicate, in an implicit indication manner, the radio frequency apparatus to turn off the first module. This improves flexibility of a communication system.

In this embodiment of this application, the network control apparatus may further determine that the first module configured to process uplink data does not carry data, or the first module configured to process downlink data does not carry data. In a possible implementation, the radio frequency apparatus determines first information. The first information indicates that the first module does not carry the uplink data on the first time resource, and/or the first information indicates that the first module does not carry the downlink data on the first time resource.

For example, the first information may be a field including at least one bit. That the first information has one bit is used as an example. For example, when the bit is "0", the first information indicates that the first module does not carry the uplink data on the first time resource; and when the bit is "1", the first information indicates that the first module does not carry the downlink data on the first time resource. Alternatively, that the first information has two bits is used as an example. When the bit is "00", the first information indicates that the first module does not carry the uplink data or downlink data on the first time resource. When the bit is "10", the first information indicates that the first module carries the uplink data but does not carry the downlink data on the first time resource. When the bit is "01", the first information indicates that the first module does not carry the uplink data but carries the downlink data on the first time resource. When the bit is "11", the first information indicates that the first module carries both the uplink data and downlink data on the first time resource.

Therefore, in this application, the network control apparatus may determine that a module configured to process uplink data or a module configured to process downlink data does not carry data, so that the radio frequency apparatus can turn off the module that does not carry data, to improve flexibility of turning-off control, and further effectively reduce losses of a communication system.

Optionally, when the usage status is that the first module carries data on a second time resource, the first information further indicates the first module to carry the uplink data on the second time resource, and/or the first information further indicates the first module to carry the downlink data on the second resource. Correspondingly, the radio frequency apparatus may turn on, at a second moment corresponding to the second time resource, the first module configured to process the uplink data, and/or the radio frequency apparatus may turn on, at a second moment corresponding to the second time resource, the first module configured to process the downlink data. For brevity, details are not described herein.

In this embodiment of this application, the network control apparatus may further determine a specific radio frequency channel corresponding to the first module that does not carry data or specific radio frequency channels corresponding to the first modules that do not carry data. In a possible implementation, the radio frequency apparatus determines second information. The second information indicates that the first module corresponding to a radio frequency channel does not carry data on the first time resource.

For example, the second information may be identification information of a radio frequency channel corresponding to the first module, or the second information may be identification information of a cell corresponding to the first module. The identification information of the cell may be used to index the radio frequency channel corresponding to the first module. In addition, the second information may include both the identification information of the radio frequency channel corresponding to the first module and the identification information of the cell. This is not particularly limited in this application.

The second information and the indication information may be respectively carried in two fields, or the second information and the indication information may be carried in one field. For example, a field of an array structure may be used to describe both the second information and the indication information.

By way of example rather than limitation, the network control apparatus may further send, to the radio frequency apparatus, information indicating a quantity of radio frequency channels of the radio frequency apparatus. The following uses an example in which the quantity information indicates that the radio frequency apparatus includes P radio frequency channels, and the indication information indicates whether the first module carries data on each of N symbols, where both P and N are positive integers.

In a first possible implementation, P arrays are defined, and each array includes at least N bits. The P arrays are in a one-to-one correspondence with the P radio frequency channels, and the N bits are in a one-to-one correspondence with the N symbols. For example, when a j^{th} bit in the N bits of an i^{th} array in the P arrays is "0", the radio frequency apparatus may turn off, at a first moment corresponding to a j^{th} symbol in the N symbols, the first module corresponding to an i^{th} radio frequency channel in the P radio frequency channels, where i=1, ..., P, j=1, ..., and N.

In a second possible implementation, N arrays are defined, and each array includes at least P bits. The N arrays are in a one-to-one correspondence with the N symbols, and the P bits are in a one-to-one correspondence with the P radio frequency channels. For example, when an s^{th} bit in the P bits of the k^{th} array in the N arrays is "0", the radio frequency apparatus may turn off, at a first moment corresponding to a k^{th} symbol in the N symbols, the first module corresponding to an s^{th} radio frequency channel in the P radio frequency channels, where s=1, ..., P, k=1, ..., and N.

It should be understood that the foregoing describes, in an array form, that the first module does not carry data on a time resource or time resources and a specific radio frequency channel or specific radio frequency channels. A position of a bit in the array is used to describe a time resource and a radio frequency channel, and a bit is set to "0" to indicate that the first module does not carry data. Similarly, the bit is set to " 1" to indicate that the first module carries data. The foregoing is merely an example for description. This application may further include another definition manner that can be described.

The network control apparatus may notify, by determining the second information, that the first module does not carry data on a specific radio frequency channel or specific radio frequency channels, so that the radio frequency apparatus turns off the first module corresponding to a radio frequency channel that does not carry data. This improves turning-off flexibility and further effectively reduces losses of a communication system.

S302: The network control apparatus sends the indication information to the radio frequency apparatus, and correspondingly, the radio frequency apparatus receives the indication information sent by the network control apparatus.

The network control apparatus may individually send the indication information to the radio frequency apparatus, or may send a first message (for example, a real-time control message) including the indication information to the radio frequency apparatus. This is not particularly limited in this application.

For example, when the first time resource is a subframe resource, the first message may include a subframe number of the subframe resource. For example, the subframe number is a subframe number in a radio frame, so that the radio frequency apparatus may learn of, based on the indication information, a specific subframe resource on which the first module does not carry data or carries data.

For another example, when the first time resource is a slot resource, the first message may include a slot number of the slot resource. For example, the slot number may be a slot number in a subframe, so that the radio frequency apparatus may learn of, based on the indication information, a specific slot resource on which the first module does not carry data or carries data.

It should be understood that when the network control apparatus separately sends the indication information to the radio frequency apparatus, the network control apparatus may also separately send the subframe number and the slot number to the radio frequency apparatus. For brevity, details are not described herein.

If the network control apparatus further determines the first information, the method 300 may further include:

The network control apparatus sends the first information to the radio frequency apparatus, and correspondingly, the radio frequency apparatus receives the first information from the network control apparatus.

The network control apparatus may separately send the first information to the radio frequency apparatus, or may send a first message including the first information to the radio frequency apparatus. This is not particularly limited in this application.

When the network control apparatus further determines the second information, the method 300 may further include:

The network control apparatus sends the second information to the radio frequency apparatus, and correspondingly, the radio frequency apparatus receives the second information from the network control apparatus.

The network control apparatus may separately send the second information to the radio frequency apparatus, or may send a first message including the second information to the radio frequency apparatus. This is not particularly limited in this application.

S303: The radio frequency apparatus turns off the first module based on the usage status when the usage status is that the first module does not carry data on the first resource.

When the first resource includes the first time resource, the radio frequency apparatus may learn, based on the usage status, that the first module does not carry data on the first time resource.

The radio frequency apparatus may turn off the first module at a first moment corresponding to the first time resource.

Alternatively, the radio frequency apparatus may enable the first module to be in a turning-off state during time corresponding to the first time resource.

The first moment is a moment in the first time resource. For example, the first moment may be an initial moment in the first time resource.

If the network control apparatus further sends the first information to the radio frequency apparatus, when the first information indicates that the first module does not carry uplink data on the first time resource, the radio frequency apparatus turns off, at the first moment, the first module configured to process the uplink data;
when the first information indicates that the first module does not carry downlink data on the first time resource, the radio frequency apparatus turns off, at the first moment, the first module configured to process the downlink data; and
when the first information indicates that the first module does not carry the uplink data or downlink data on the first time resource, the radio frequency apparatus turns off, at the first moment, the first module configured to process the uplink data and/or the first module configured to process the downlink data.

It should be understood that, that the radio frequency apparatus turns off, at the first moment, the first module configured to process the downlink data may refer to turning-off of all or some modules configured to process the downlink data in the radio frequency apparatus. Correspondingly, that the radio frequency apparatus turns off, at the first moment, the first module configured to process the uplink data may refer to turning-off of all or some modules configured to process the uplink data in the radio frequency apparatus. For example, the first module configured to process the downlink data may include but is not limited to a PA, a digital-to-analog converter, and an ROC, and the first module configured to process the uplink data may include but is not limited to an LNA, a down-converter, and an analog-to-digital converter.

If the network control apparatus further sends the second information to the radio frequency apparatus, where the second information indicates that the first module corresponding to a radio frequency channel does not carry data on the first time resource, the radio frequency apparatus turns off the first module corresponding to the radio frequency channel.

If the network control apparatus further sends the first information and the second information to the radio frequency apparatus, when the first information indicates that the first module does not carry the uplink data on the first time resource, the radio frequency apparatus turns off, at the first moment, the first module that is configured to process the uplink data and that corresponds to the radio frequency channel indicated by the second information; when the first information indicates that the first module does not carry the downlink data on the first time resource, the radio frequency apparatus turns off, at the first moment, the first module that is configured to process the downlink data and that corresponds to the radio frequency channel indicated by the second information; and when the first information indicates that the first module does not carry the uplink data and downlink data on the first time resource, the radio frequency apparatus turns off, at the first moment, the first module that is configured to process the uplink data and downlink data and that corresponds to the radio frequency channel indicated by the second information.

For example, the network control apparatus sends a subframe whose number is 1 to the radio frequency apparatus. A slot number 5 indicates a fifth slot in the subframe, a first information bit being set to 0 indicates downlink, a quantity of radio frequency channels is 5, the second information indicates a second radio frequency channel in the five radio frequency channels, and the indication information being set to 0 indicates that no data is carried in a slot. In this case, the radio frequency apparatus turns off, at an initial moment corresponding to a fifth slot in a first subframe in a radio frame, the first module that is configured to process the downlink data and that corresponds to the second radio frequency channel in the five radio frequency channels.

For another example, the network control apparatus sends a subframe whose number is 1 to the radio frequency apparatus. A slot number 5 indicates a fifth slot in the subframe, a first information bit is set to 0 to indicate downlink, a quantity of radio frequency channels is 5, the second information indicates a second radio frequency channel in the five radio frequency channels, and the indication information being set to 10101 indicates that second and fourth symbols in a slot do not carry data, and first, third, and fifth symbols carry data. In this case, the radio frequency apparatus turns off, at initial moments corresponding to second and fourth symbols in a fifth slot in a first subframe in a radio frame, the first module that is configured to process the downlink data and that corresponds to the second radio frequency channel in the five radio frequency channels, and correspondingly, turns on, at initial moments corresponding to first, third, and fifth symbols in the fifth slot, the first module that is configured to process the downlink data and that corresponds to the second radio frequency channel in the five radio frequency channels.

It should be understood that, in this embodiment of this application, the first moment may alternatively be another moment in the first time resource. For example, a specific threshold is reserved when the first time resource is initially entered, and a moment after the first time resource initially entered is used as the first moment at which the first module needs to be turned off, so that turning-off reliability can be improved.

It should be noted that time at which the radio frequency apparatus receives the indication information should be earlier than the first moment, or in other words, should be earlier than time at which data is received. Timing advance between time at which the network control apparatus sends the indication information and time at which the network control apparatus sends the data is related to a processing delay in parsing the indication information and performing turning-off by the radio frequency apparatus.

The radio frequency apparatus may parse the indication information, and turn off the first module at the first moment. The turning-off may refer to powering off the first module, or may refer to enabling the first module to enter a hibernation state, or another case in which energy can be saved.

In addition, that the radio frequency apparatus turns off the first module may mean that all components or some components in the first module are turned off. This is not particularly limited in this application.

In a possible manner, the first resource further includes the second time resource. When the usage status is that the first module does not carry data on the first time resource and the first module carries data on the second time resource, the radio frequency apparatus turns off the first module at the first moment corresponding to the first time resource, and the radio frequency apparatus turns on the first module at a second moment corresponding to the second time resource. Alternatively, the radio frequency apparatus enables the first module to be in a turning-off state during time corresponding to the first time resource, and the radio frequency apparatus enables the second module to be in a turning-on state during time corresponding to the second time resource.

The second moment may be an initial moment in the second time resource, or may be a moment earlier than the time corresponding to the second time resource, to ensure that the first module is in a turning-on state when the radio frequency apparatus receives data at the time corresponding to the second time resource.

For example, when the first resource includes a plurality of symbol resources, if the communication system performs scheduling by using a slot as a time unit, the first resource is N symbols included in one slot, and N is a positive integer. The indication information may be set to include N bits, where the N bits are in a one-to-one correspondence with the N symbols, N is a positive integer, and each bit in the N bits may indicate whether the first module carries data on a corresponding symbol. Therefore, the radio frequency apparatus may determine, based on the indication information, specific symbols that are first time resources that do not carry data, and specific symbols that are second time resources for carrying data.

The following provides description with reference to FIG. 4. FIG. 4 is a diagram of turning off and turning on a first module. As shown in FIG. 4, indication information includes 10 bits, where the 10 bits correspond to 10 symbols, a bit set to 0 indicates that the first module does not carry data on a symbol, and a bit set to 1 indicates that the first module carries data on a symbol. If the indication information is 1001011000, a radio frequency status may be that the first module is turned off on second, fifth, and eighth symbols, and the first module is turned on on first, fourth, and sixth symbols.

Therefore, in this application, the network control apparatus may send, to the radio frequency apparatus, the indication information indicating the usage status of the first resource. When the first module does not carry data on the first resource, the radio frequency apparatus may turn off the first module, so that losses of a communication system can be effectively reduced.

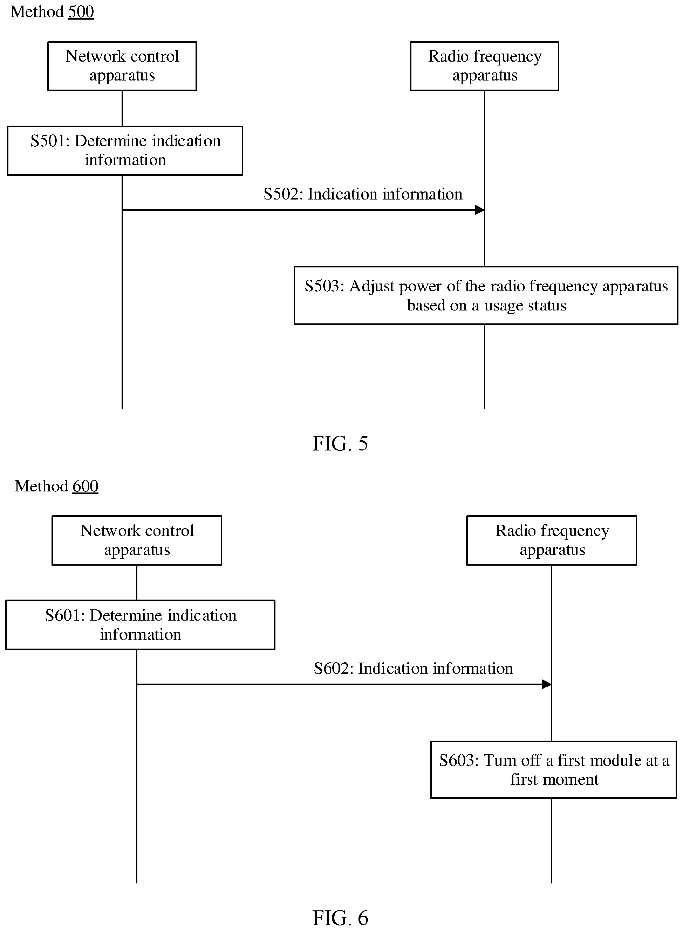

FIG. 5 is a schematic flowchart of an information transmission method 500 according to an embodiment of this application.

S501: A network control apparatus determines indication information.

The indication information indicates a usage status of a first resource, and the usage status is a status of data carried on the first resource.

Optionally, the first resource may be a first frequency domain resource.

The status of the data carried on the first resource may be any one or more of the following five cases.

Case 1: whether the first frequency domain resource carries data.

The first frequency domain resource may be a frequency domain resource corresponding to a first time domain resource, for example, may be a frequency domain resource corresponding to one or more slots, a frequency domain resource corresponding to one or more subframes, or a frequency domain resource corresponding to one or more symbols. For example, the status of the data carried on the first resource may be whether data is carried on a frequency domain resource corresponding to one slot.

Alternatively, the first frequency domain resource may be some frequency bands in the frequency domain resource corresponding to the first time domain resource. For example, the frequency domain resource corresponding to one slot is divided into a plurality of frequency bands, and the status of the data carried on the first resource may be whether data is carried on a specific frequency band or specific frequency bands in the plurality of frequency bands.

Case 2: utilization of the first frequency domain resource.

The utilization of the first frequency domain resource may be a percentage of a bandwidth of data carried on the first frequency domain resource to a total bandwidth of the first frequency domain resource. For example, the first frequency domain resource includes a bandwidth of 100 M (million bits per second, M), where a bandwidth of 80 M carries data, and a bandwidth of 20 M does not carry data. The utilization of the first frequency domain resource is 80%. For another example, the first frequency domain resource includes 10 frequency bands, where eight frequency bands carry data, and two frequency bands do not carry data. The utilization of the first frequency domain resource is 80%.

Case 3: a bandwidth of a frequency domain resource of the first frequency domain resource on which data is carried.

For example, the first frequency domain resource includes 10 frequency bands, a bandwidth of each frequency band is 20 M, eight frequency bands in the 10 frequency bands carry data, and two frequency bands do not carry data. The indication information may indicate that the bandwidth of the frequency domain resource of the first frequency domain resource on which data is carried is 160 M, or the indication information may indicate that the bandwidth of the frequency domain resource of the first frequency domain resource on which data is carried is a sum of bandwidths of the eight frequency bands.

Case 4: a bandwidth of a frequency domain resource of the first frequency domain resource on which data is not carried.

For example, the first frequency domain resource includes 10 frequency bands, a bandwidth of each frequency band is 20 M, eight frequency bands in the 10 frequency bands carry data, and two frequency bands do not carry data. The indication information may indicate that the bandwidth of the frequency domain resource of the first frequency domain resource on which data is not carried is 40 M, or the indication information may indicate that the bandwidth of the frequency domain resource of the first frequency domain resource on which data is not carried is a sum of bandwidths of the two frequency bands.

Case 5: an occupation variation of a bandwidth of data carried on the first frequency domain resource.

The occupation variation of the bandwidth may be a difference between the bandwidth of the data carried on the first frequency domain resource and a bandwidth of data carried on a second frequency domain resource. A slot or a symbol corresponding to the first frequency domain resource is a slot or a symbol after a slot or a symbol corresponding to the second frequency domain resource. For example, the first frequency domain resource is a frequency domain resource corresponding to a first slot, a second slot is a slot before the first slot, a frequency domain resource that is in a frequency domain resource corresponding to the second slot and that carries data is 60 M, and a frequency domain resource that is in the first frequency domain resource corresponding to the first slot and that carries data is 20 M. In this case, the occupation variation of the bandwidth of the data carried on the first frequency domain resource may be a reduction of 40 M.

In this embodiment of this application, the network control apparatus may further determine that the first module configured to process uplink data does not carry data, or the first module configured to process downlink data does not carry data. The following describes this.

Optionally, the network control apparatus determines third information, where the third information indicates that the usage status is a status that the first resource carries the uplink data, and/or the third information indicates that the usage status is a status that the first resource carries the downlink data.

The network control device may simultaneously indicate whether a plurality of frequency domain resources carry the uplink data and whether the plurality of frequency domain resources carry the downlink data. For example, the network control apparatus may indicate whether each frequency band in one slot carries the uplink data and whether each frequency band carries the downlink data. As shown in Table 1, a frequency domain resource corresponding to one slot includes 10 frequency bands, which are respectively a frequency band 1 to a frequency band 10, and each frequency band has a bandwidth of 20 M. When indication information corresponding to each frequency band is set to " 1", it indicates that the frequency band carries data; and when the indication information corresponding to each frequency band is set to "0", it indicates that the frequency band does not carry data. Therefore, as shown in Table 1, in an uplink direction, the frequency band 1 and the frequency band 8 carry the uplink data, and other frequency bands do not carry the uplink data; and in a downlink direction, the frequency band 1 and the frequency band 7 carry the downlink data, and other frequency bands do not carry the downlink data.

**Table 1: Indication graph**

| Third information | Uplink | Downlink |
|---|---|---|
| Frequency band 1 | 1 | 1 |
| Frequency band 2 | 0 | 0 |
| Frequency band 3 | 0 | 0 |
| Frequency band 4 | 0 | 0 |
| Frequency band 5 | 0 | 0 |
| Frequency band 6 | 0 | 0 |
| Frequency band 7 | 0 | 1 |
| Frequency band 8 | 1 | 0 |
| Frequency band 9 | 0 | 0 |
| Frequency band 10 | 0 | 0 |

After receiving a message shown in Table 1, the radio frequency apparatus may learn that uplink data of a bandwidth of 40 M and downlink data of a bandwidth of 40 M need to be processed, to adjust power of a module configured to process the uplink data, for example, an FFT, to a power level corresponding to the bandwidth of 40 M, and adjust power of a module configured to process the downlink data, for example, an IFFT, to the power level corresponding to the bandwidth of 40 M.

S502: The network control apparatus sends the indication information to the radio frequency apparatus, and correspondingly, the radio frequency apparatus receives the indication information from the network control apparatus.

The network control apparatus may individually send the indication information to the radio frequency apparatus, or may send a first message (for example, a real-time control message) including the indication information to the radio frequency apparatus. This is not particularly limited in this application.

Optionally, the network control apparatus sends, to the radio frequency apparatus, information indicating a first slot resource corresponding to the first frequency domain resource. For example, the network control apparatus may further send, to the radio frequency apparatus, a slot number, a subframe number, or a symbol number corresponding to the first frequency domain resource.

When the network control apparatus further determines the third information, the method 500 may further include the following.

Optionally, the network control apparatus sends the third information to the radio frequency apparatus, and correspondingly, the radio frequency apparatus receives the third information from the network control apparatus.

The network control apparatus may separately send the third information to the radio frequency apparatus, or may send the first message including the third information to the radio frequency apparatus. This is not particularly limited in this application.

S503: The radio frequency apparatus adjusts power of the radio frequency apparatus based on the usage status.

The radio frequency apparatus may adjust the power based on the usage status, so that a data processing capability of the radio frequency apparatus matches data that needs to be processed.

Adjusting the power of the radio frequency apparatus may be adjusting power of at least one of the following modules in the radio frequency apparatus: a baseband processing module, an intermediate frequency processing module, a radio frequency processing module, and a power module.

Alternatively, adjusting the power of the radio frequency apparatus may be adjusting power of at least one of the following components in the radio frequency apparatus: all or some components in the baseband processing module, all or some components in the intermediate frequency processing module, all or some components in the radio frequency processing module, and all or some components in the power module.

If the power of the radio frequency apparatus is adjusted to 0 or less than a preset threshold, it may be understood that all or some modules in the radio frequency apparatus are turned off, or all or some modules enter a hibernation state.

It should be understood that all or some modules whose power is adjusted are related to functions of the radio frequency apparatus. For example, when the radio frequency apparatus has a module configured to process a bandwidth of a frequency band, and the frequency band does not carry data, power of the module may be adjusted to 0 or less than a preset threshold.

In addition, if the network control apparatus further sends the third information to the radio frequency apparatus, when the third information indicates that the usage status is a status that the first resource carries the uplink data, the radio frequency apparatus adjusts, based on the usage status, power that is in the radio frequency apparatus and that is used to process the uplink data;
when the third information indicates that the usage status is a status that the first resource carries the downlink data, the radio frequency apparatus adjusts, based on the usage status, power that is in the radio frequency apparatus and that is used to process the downlink data; and
when the third information indicates that the usage status is a status that the first resource carries the uplink data and downlink data, the radio frequency apparatus adjusts, based on the usage status, power that is in the radio frequency apparatus and that is used to process the uplink data and downlink data.

It should be understood that the radio frequency apparatus adjusts the power that is in the radio frequency apparatus and that is used to process the uplink data may refer to adjusting power of all or some modules configured to process the uplink data in the radio frequency apparatus. Correspondingly, that the radio frequency apparatus adjusts power that is in the radio frequency apparatus and that is used to process the downlink data may refer to adjusting power of all or some modules configured to process the downlink data in the radio frequency apparatus. For example, the power used to process the downlink data may include but is not limited to power of an IFFT, and the power used to process the uplink data may include but is not limited to power of an FFT.

That the radio frequency apparatus adjusts power of the radio frequency apparatus based on the usage status includes: The radio frequency apparatus determines the power of the radio frequency apparatus based on the bandwidth of the data carried on the first frequency domain resource, so that the power of the radio frequency apparatus matches the bandwidth of the data carried on the first resource.

For example, for the foregoing case 1, if the usage status indicates that the first frequency domain resource corresponding to the first time resource does not carry data, the radio frequency apparatus may adjust the power of the radio frequency apparatus to 0 or less than a preset threshold.

For another example, for the foregoing case 2, if the usage status indicates utilization of the first frequency domain resource, the radio frequency apparatus may determine, based on the utilization, the bandwidth of the data carried on the first resource, and adjust, based on a correspondence between a bandwidth and power, power of a corresponding module in the radio frequency apparatus to power corresponding to the bandwidth. The correspondence may be preset based on a hardware feature of the radio frequency apparatus.

For another example, for the foregoing case 3, if the usage status indicates the bandwidth of the frequency domain resource of the first frequency domain resource on which data is carried, the radio frequency apparatus may adjust, based on a correspondence between a bandwidth and power, power of a corresponding module in the radio frequency apparatus to power corresponding to the bandwidth.

For another example, for the foregoing case 4, if the usage status indicates the bandwidth of the frequency domain resource of the first frequency domain resource on which data is not carried, the radio frequency apparatus may determine, based on the bandwidth of the frequency domain resource on which data is not carried, the bandwidth of the data carried on the first resource, and adjust, based on a correspondence between a bandwidth and power, power of a corresponding module in the radio frequency apparatus to power corresponding to the bandwidth.

For another example, for the foregoing case 5, if the usage status indicates a reduction in the occupation variation of the bandwidth of the first frequency domain resource, the radio frequency apparatus may correspondingly reduce power of a corresponding module in the radio frequency apparatus. Correspondingly, if the usage status indicates an increase in the occupation variation of the bandwidth of the first frequency domain resource, the radio frequency apparatus may correspondingly increase power of a corresponding module in the radio frequency apparatus.

The foregoing is merely an example for description, and does not limit a manner of adjusting power in this application.

Therefore, in this application, the network control apparatus may send, to the radio frequency apparatus, the indication information indicating the usage status of the first resource, and the radio frequency apparatus adjusts the power of the radio frequency apparatus based on the usage status, so that a power level of the radio frequency apparatus may match the status of the data carried on the first resource. This reduces losses of a communication system.

FIG. 6 is a schematic flowchart of an information transmission method 600 according to an embodiment of this application.

S601: A network control apparatus determines indication information, where the indication information indicates a radio frequency apparatus to turn off a first module at a first moment, and the first module does not carry first data on a first time resource corresponding to the first moment.

The radio frequency apparatus may be the RE 120 shown in FIG. 1, and the network control apparatus may be the REC 110 shown in FIG. 1.

For descriptions of the first module, the first time resource, and the first moment, refer to the descriptions of the first module, the first time resource, and the first moment in the method 300. For brevity, details are not described herein.

The network control apparatus may schedule and manage occupation of data on a time domain resource, so that the indication information may be determined based on whether the first data occupies the first time resource (some or all scheduled time domain resources). When the first data does not occupy a location of the first time resource, the radio frequency apparatus is indicated to turn off the first module at the first moment corresponding to the first time resource.

The indication information may be turning-off indication information, and a turning-off indication may also be referred to as a symbol power-saving indication. The symbol power-saving indication may be indicated by different bit values. For example, when a bit is set to "0", it indicates that the radio frequency apparatus turns off the first module, and when a bit is set to " 1", it indicates that the radio frequency apparatus turns on the first module.

In this embodiment of this application, the network control apparatus may further determine whether to turn off the first module configured to process uplink data, or turn off the first module configured to process downlink data.

Optionally, the network control apparatus determines first information. The first information indicates that the first module does not carry uplink data on the first time resource, and/or the first information indicates that the first module does not carry downlink data on the first time resource. Alternatively, the first information indicates that the first module is a module configured to process uplink data, or the first information indicates that the first module is a module configured to process downlink data.

For description of the first information, refer to the description of the first information in the method 300. For brevity, details are not described herein.

In this embodiment of this application, the network control apparatus may further determine a specific radio frequency channel or specific radio frequency channels on which the first module is to be turned off.

Optionally, the network control apparatus determines second information. The second information indicates that the first module corresponding to a radio frequency channel does not carry data on the first time resource. Alternatively, the second information indicates that the first module is a module in the radio frequency channel.

For description of the second information, refer to the description of the second information in the method 300. For brevity, details are not described herein.

S602: The radio frequency apparatus receives the indication information from the network control apparatus, and correspondingly, the network control apparatus sends the indication information to the radio frequency apparatus.

The indication information indicates the radio frequency apparatus to turn off the first module at the first moment, and the first module does not carry the first data on the first time resource corresponding to the first moment.

For a description of sending the indication information by the network control apparatus to the radio frequency apparatus, refer to the description of step S302 in the method 300. For brevity, details are not described herein.

When the network control apparatus further determines the first information, the method 600 may further include the following.

Optionally, the network control apparatus sends the first information to the radio frequency apparatus, and correspondingly, the radio frequency apparatus receives the first information from the network control apparatus.

When the network control apparatus further determines the second information, the method 600 may further include the following.

Optionally, the network control apparatus sends the second information to the radio frequency apparatus, and correspondingly, the radio frequency apparatus receives the second information from the network control apparatus.

The network control apparatus may send the first information, or send the second information, or send the first information and the second information to the radio frequency apparatus. An implementation is similar to that described in the method 300. For brevity, details are not described herein.

S603: The radio frequency apparatus turns off the first module at the first moment.

For a description of turning off the first module, refer to the description of turning off the first module in the method 300. For brevity, details are not described herein.

When the network control apparatus further sends the first information to the radio frequency apparatus, the radio frequency apparatus may further turn off, based on the first information, the first module configured to process uplink data and/or the first module configured to process downlink data.

When the network control apparatus further sends the second information to the radio frequency apparatus, the radio frequency apparatus may further turn off the first module in a radio frequency channel indicated by the second information.

When the network control apparatus sends the first information and the second information to the radio frequency apparatus, the radio frequency apparatus may turn off the first module configured to process uplink data and/or the first module configured to process downlink data in a radio frequency channel indicated by the second information.

For a description of turning off the first module by the radio frequency module, refer to the description of turning off the first module in the method 300. For brevity, details are not described herein.

Therefore, in this application, when the first time resource is not occupied, and the first module does not carry data on the first time resource, the network control apparatus may indicate the radio frequency apparatus to turn off the first module, so that losses of a communication system can be effectively reduced.

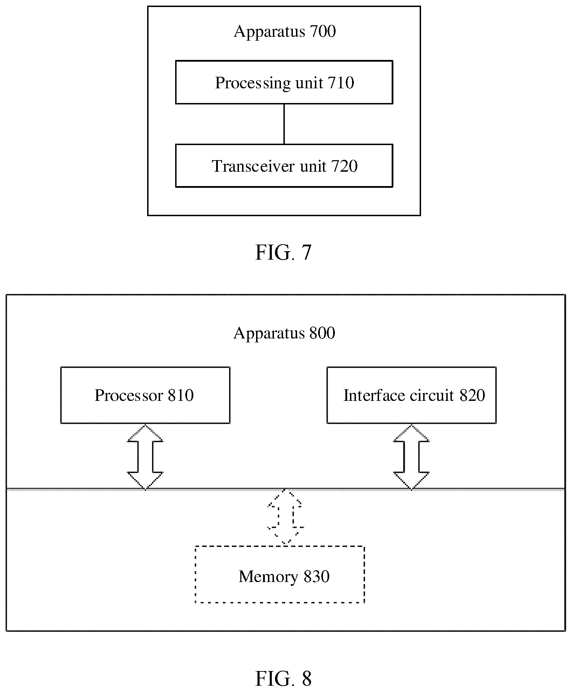

FIG. 7 and FIG. 8 are diagrams of possible structures of apparatuses according to embodiments of this application. These communication apparatuses may be configured to implement functions of the radio frequency apparatus and the network control apparatus in the foregoing method embodiments, and therefore can also implement beneficial effects of the foregoing method embodiments. In embodiments of this application, the apparatus may be a radio frequency apparatus and a network control apparatus, or may be a module (such as a chip) used in the radio frequency apparatus and the network control apparatus.

As shown in FIG. 7, an apparatus 700 includes a processing unit 710 and a transceiver unit 720. The apparatus 700 is configured to implement functions of the radio frequency apparatus in the method embodiment shown in FIG. 3 or FIG. 5. Alternatively, the apparatus 700 may include a module configured to implement any function or operation of the radio frequency apparatus in the method embodiment shown in FIG. 3 or FIG. 5. The module may be all or partially implemented by using software, hardware, firmware, or any combination thereof.

When the apparatus 700 is configured to implement the functions of the radio frequency apparatus in the method embodiment shown in FIG. 3, the transceiver unit 720 is configured to receive indication information from the network control apparatus. The indication information indicates a usage status of a first resource, and the usage status is whether a first module carries data on the first resource. The processing unit 710 is configured to turn off the first module based on the usage status when the usage status is that the first module does not carry data on the first resource.

Therefore, in this application, the network control apparatus may send, to the radio frequency apparatus, the indication information indicating the usage status of the first resource. When the first module does not carry data on the first resource, the radio frequency apparatus may turn off the first module, so that losses of a communication system can be effectively reduced.

For more detailed descriptions of the processing unit 710 and the transceiver unit 720, directly refer to related descriptions of the method embodiment shown in FIG. 2. Details are not described herein.

When the apparatus 700 is configured to implement the functions of the network control apparatus in the method embodiment shown in FIG. 3, the processing unit 710 is configured to determine the indication information. The indication information indicates the usage status of the first resource, and the usage status is whether the first module carries data on the first resource. The transceiver unit 720 is configured to send the indication information to the radio frequency apparatus.

For more detailed descriptions of the processing unit 710 and the transceiver unit 720, directly refer to related descriptions of the method embodiment shown in FIG. 3. Details are not described herein.

When the apparatus 700 is configured to implement the functions of the radio frequency apparatus in the method embodiment shown in FIG. 5, the transceiver unit 720 is configured to receive the indication information from the network control apparatus. The indication information indicates the usage status of the first resource, and the usage status is a status of data carried on the first resource. The processing unit 710 is configured to adjust power of the radio frequency apparatus based on the usage status.

Therefore, in this application, the network control apparatus may send, to the radio frequency apparatus, the indication information indicating the usage status of the first resource, and the radio frequency apparatus adjusts the power of the radio frequency apparatus based on the usage status, so that a power level of the radio frequency apparatus may match the status of the data carried on the first resource. This reduces losses of a communication system.

For more detailed descriptions of the processing unit 710 and the transceiver unit 720, directly refer to related descriptions of the method embodiment shown in FIG. 5. Details are not described herein.

When the apparatus 700 is configured to implement the functions of the network control apparatus in the method embodiment shown in FIG. 3, the processing unit 710 is configured to determine the indication information. The indication information indicates the usage status of the first resource, and the usage status is whether the first module carries data on the first resource. The transceiver unit 720 is configured to send the indication information to the radio frequency apparatus.

For more detailed descriptions of the processing unit 710 and the transceiver unit 720, directly refer to related descriptions of the method embodiment shown in FIG. 5. Details are not described herein.

As shown in FIG. 8, an apparatus 800 includes a processor 810 and an interface circuit 820. The processor 810 and the interface circuit 820 are coupled to each other. It may be understood that the interface circuit 820 may be a transceiver or an input/output interface. Optionally, the apparatus 800 may further include a memory 830, configured to store instructions executed by the processor 810, or store input data required by the processor 810 to run the instructions, or store data generated after the processor 810 runs the instructions.

When the apparatus 800 is configured to implement the functions of the radio frequency apparatus in the method embodiment in FIG. 3 or FIG. 5, the processor 810 is configured to implement functions of the processing unit 710, and the interface circuit 820 is configured to implement functions of the obtaining unit 820.

When the apparatus 800 is configured to implement the functions of the network control apparatus in the method embodiment in FIG. 3 or FIG. 5, the processor 810 is configured to implement functions of the processing unit 710, and the interface circuit 820 is configured to implement functions of the transceiver unit 820.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The memory in this embodiment of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used for implementation, the implementation may be totally or partially implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, a terminal device, or another programmable apparatus. The computer programs or the instructions may be stored in a computer-readable storage medium, or may be transmitted by using a computer-readable storage medium. The computer-readable storage medium may be any usable medium accessible by the computer, or a data storage device such as a server integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid state disk, SSD).

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that in embodiments of this application, numbers "first", "second", ... are merely used to distinguish between different objects, for example, to distinguish between different network devices, and constitute no limitation on the scope of embodiments of this application. Embodiments of this application are not limited thereto.

It should be further understood that, in this application, both "when ..." and "if" mean that a network element performs corresponding processing in an objective situation, and are not intended to limit time. The terms do not mean that the network element is required to have a determining action during implementation, and do not mean any other limitation.

It should be further understood that in embodiments of this application, "B corresponding to A" indicates that B is associated with A, and B may be determined based on A. However, it should be further understood that determining B based on A does not mean that B is determined only based on A. B may also be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, a character "/" in this specification generally indicates an "or" relationship between associated objects.

Unless otherwise specified, an expression in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that various numerals used in embodiments of this application are merely distinguished for ease of description, but are not intended to limit the scope of embodiments of this application. Sequence numbers of the foregoing processes do not mean an execution sequence, and the execution sequence of the processes should be determined based on functions and internal logic of the processes.

## Claims

1. An information transmission method, wherein the method comprises:
receiving, by a radio frequency apparatus, indication information from a network control apparatus, wherein the indication information indicates a usage status of a first resource, and the usage status is whether a first module carries data on the first resource; and
turning off, by the radio frequency apparatus, the first module based on the usage status when the usage status is that the first module does not carry data on the first resource.

2. The method according to claim 1, wherein the first resource comprises a first time resource; and
the turning off, by the radio frequency apparatus, the first module based on the usage status when the usage status is that the first module does not carry data on the first resource comprises: turning off, by the radio frequency apparatus, the first module at a first moment corresponding to the first time resource when the usage status is that the first module does not carry data on the first time resource.

3. The method according to claim 2, wherein the method further comprises:
receiving, by the radio frequency apparatus, first information from the network control apparatus, wherein the first information indicates that the first module does not carry uplink data on the first time resource, and/or the first information indicates that the first module does not carry downlink data on the first time resource; and
the turning off, by the radio frequency apparatus, the first module at a first moment corresponding to the first time resource comprises:
turning off, by the radio frequency apparatus at the first moment corresponding to the first time resource, the first module configured to process the uplink data; and/or
turning off, by the radio frequency apparatus at the first moment corresponding to the first time resource, the first module configured to process the downlink data.

4. The method according to claim 2, wherein the method further comprises:
receiving, by the radio frequency apparatus, second information from the network control apparatus, wherein the second information indicates that the first module corresponding to a radio frequency channel does not carry data on the first time resource; and
the turning off, by the radio frequency apparatus, the first module at a first moment corresponding to the first time resource comprises:
turning off, by the radio frequency apparatus at the first moment, the first module corresponding to the radio frequency channel.

5. The method according to claim 2, wherein the method further comprises:
receiving, by the radio frequency apparatus, first information and second information from the network control apparatus, wherein
the first information indicates that the first module does not carry uplink data on the first time resource, and/or the first information indicates that the first module does not carry downlink data on the first time resource; the second information indicates that the first module corresponding to a radio frequency channel does not carry data on the first time resource; and
the turning off, by the radio frequency apparatus, the first module at a first moment corresponding to the first time resource comprises:
turning off, by the radio frequency apparatus at the first moment, the first module that is configured to process the uplink data and that corresponds to the radio frequency channel; and/or
turning off, by the radio frequency apparatus at the first moment, the first module that is configured to process the downlink data and that corresponds to the radio frequency channel.

6. The method according to any one of claims 1 to 5, wherein the indication information is status indication information, and the status indication information indicates whether the first module carries data on the first resource; and/or the indication information is turning-off indication information, and the turning-off indication information indicates whether the radio frequency apparatus turns off the first module.

7. The method according to any one of claims 2 to 6, wherein the first time resource is any one of the following resources: a subframe resource, a symbol resource, and a slot resource.

8. The method according to any one of claims 1 to 7, wherein the first module comprises at least one of the following modules: a baseband processing module, an intermediate frequency processing module, a radio frequency processing module, and a power module.

9. An information transmission method, wherein the method comprises:
receiving, by a radio frequency apparatus, indication information from a network control apparatus, wherein the indication information indicates a usage status of a first resource, and the usage status is a status of data carried on the first resource; and
adjusting, by the radio frequency apparatus, power of the radio frequency apparatus based on the usage status.

10. The method according to claim 9, wherein the first resource is a first frequency domain resource, and the status of the data carried on the first resource comprises:
whether the first frequency domain resource carries data, or utilization of the first frequency domain resource, or a bandwidth of a frequency domain resource of the first frequency domain resource on which data is carried, or a bandwidth of a frequency domain resource of the first frequency domain resource on which data is not carried, or an occupation variation of a bandwidth of data carried on the first frequency domain resource.

11. The method according to claim 9 or 10, wherein the method further comprises:
receiving, by the radio frequency apparatus, third information from the network control apparatus, wherein the third information indicates that the usage status is a status that the first resource carries uplink data, and/or the third information indicates that the usage status is a status that the first resource carries downlink data; and
the adjusting, by the radio frequency apparatus, power of the radio frequency apparatus based on the usage status comprises:
adjusting, by the radio frequency apparatus based on the usage status, power that is in the radio frequency apparatus and that is used to process the uplink data; and/or
adjusting, by the radio frequency apparatus based on the usage status, power that is in the radio frequency apparatus and that is used to process the downlink data.

12. The method according to any one of claims 9 to 11, wherein the adjusting, by the radio frequency apparatus, power of the radio frequency apparatus based on the usage status comprises:
adjusting, by the radio frequency apparatus, power of at least one of the following modules in the radio frequency apparatus based on the usage status: a baseband processing module, an intermediate frequency processing module, a radio frequency processing module, and a power module.

13. The method according to any one of claims 10 to 12, wherein the adjusting, by the radio frequency apparatus, power of the radio frequency apparatus based on the usage status comprises:
determining, by the radio frequency apparatus, the power of the radio frequency apparatus based on the bandwidth of the data carried on the first frequency domain resource.

14. An information transmission method, wherein the method comprises:
determining, by a network control apparatus, indication information, wherein the indication information indicates a usage status of a first resource, and the usage status is whether a first module carries data on the first resource; and
sending, by the network control apparatus, the indication information to a radio frequency apparatus.

15. The method according to claim 14, wherein the first resource is a first time resource.

16. The method according to claim 15, wherein the method further comprises:
sending, by the network control apparatus, first information to the radio frequency apparatus, wherein the first information indicates that the first module does not carry uplink data on the first time resource, and/or the first information indicates that the first module does not carry downlink data on the first time resource; and
the first information is further used for turning-off of the first module that processes the uplink data, and/or the first information is further used for turning-off of the first module that processes the downlink data.

17. The method according to claim 15, wherein the method further comprises:
sending, by the network control apparatus, second information to the radio frequency apparatus, wherein the second information indicates that the first module corresponding to a radio frequency channel does not carry data on the first time resource, and the second information is used for turning-off of the first module corresponding to the radio frequency channel.

18. The method according to claim 15, wherein the method further comprises:
sending, by the network control apparatus, first information and second information to the radio frequency apparatus, wherein the first information indicates that the first module does not carry uplink data on the first time resource, and/or the first information indicates that the first module does not carry downlink data on the first time resource; the second information indicates that the first module corresponding to a radio frequency channel does not carry data on the first time resource; and
the first information and the second information are used for turning-off of the first module that is configured to process the uplink data and that corresponds to the radio frequency channel, and/or the first information and the second information are used for turning-off of the first module that is configured to process the downlink data and that corresponds to the radio frequency channel.

19. The method according to any one of claims 14 to 18, wherein the indication information is status indication information, and the status indication information indicates whether the first module carries data on the first resource; and/or the indication information is turning-off indication information, and the turning-off indication information indicates whether the radio frequency apparatus turns off the first module.

20. The method according to any one of claims 15 to 19, wherein the first time resource is any one of the following resources: a subframe resource, a symbol resource, and a slot resource.

21. The method according to any one of claims 14 to 20, wherein the first module comprises at least one of the following modules: a baseband processing module, an intermediate frequency processing module, a radio frequency processing module, and a power module.

22. An information transmission method, wherein the method comprises:
determining, by a network control apparatus, indication information, wherein the indication information indicates a usage status of a first resource, and the usage status is a status of data carried on the first resource; and
sending, by the network control apparatus, the indication information to a radio frequency apparatus.

23. The method according to claim 22, wherein the first resource is a first frequency domain resource, and the status of the data carried on the first resource comprises:
whether the first frequency domain resource carries data, or utilization of the first frequency domain resource, or a bandwidth of a frequency domain resource of the first frequency domain resource on which data is carried, or a bandwidth of a frequency domain resource of the first frequency domain resource on which data is not carried, or an occupation variation of a bandwidth of data carried on the first frequency domain resource.

24. The method according to claim 23, wherein the method further comprises:
sending, by the network control apparatus, third information to the radio frequency apparatus, wherein the third information indicates that the usage status is a status that the first resource carries uplink data, and/or the third information indicates that the usage status is a status that the first resource carries downlink data; and
the third information is further used to adjust power for processing the uplink data, and/or the third information is further used to adjust power for processing the downlink data.

25. An information transmission method, wherein the method comprises:
determining, by a network control apparatus, indication information, wherein the indication information indicates a usage status of a first resource, and the usage status is whether a first module carries data on the first resource;
sending, by the network control apparatus, the indication information to a radio frequency apparatus; and
turning off, by the radio frequency apparatus, the first module based on the usage status when the usage status is that the first module does not carry data on the first resource.

26. The method according to claim 25, wherein the first resource is a first time resource; and
the turning off, by the radio frequency apparatus, the first module based on the usage status when the usage status is that the first module does not carry data on the first resource comprises:
turning off, by the radio frequency apparatus, the first module at a first moment corresponding to the first time resource when the usage status is that the first module does not carry data on the first time resource.

27. The method according to claim 26, wherein the method further comprises:
sending, by the network control apparatus, first information to the radio frequency apparatus, wherein the first information indicates that the first module does not carry uplink data on the first time resource, and/or the first information indicates that the first module does not carry downlink data on the first time resource; and
the turning off, by the radio frequency apparatus, the first module at a first moment corresponding to the first time resource comprises:
turning off, by the radio frequency apparatus at the first moment corresponding to the first time resource, the first module configured to process the uplink data; and/or
turning off, by the radio frequency apparatus at the first moment corresponding to the first time resource, the first module configured to process the downlink data.

28. The method according to claim 26, wherein the method further comprises:
sending, by the network control apparatus, second information to the radio frequency apparatus, wherein the second information indicates that the first module corresponding to a radio frequency channel does not carry data on the first time resource; and
the turning off, by the radio frequency apparatus, the first module at a first moment corresponding to the first time resource comprises:
turning off, by the radio frequency apparatus at the first moment, the first module corresponding to the radio frequency channel.

29. The method according to claim 26, wherein the method further comprises:
sending, by the network control apparatus, first information and second information to the radio frequency apparatus, wherein
the first information indicates that the first module does not carry uplink data on the first time resource, and/or the first information indicates that the first module does not carry downlink data on the first time resource; the second information indicates that the first module corresponding to a radio frequency channel does not carry data on the first time resource; and
the turning off, by the radio frequency apparatus, the first module at a first moment corresponding to the first time resource comprises:
turning off, by the radio frequency apparatus at the first moment, the first module that is configured to process the uplink data and that corresponds to the radio frequency channel; and/or
turning off, by the radio frequency apparatus at the first moment, the first module that is configured to process the downlink data and that corresponds to the radio frequency channel.

30. The method according to any one of claims 25 to 29, wherein the indication information is status indication information, and the status indication information indicates whether the first module carries data on the first resource; and/or the indication information is turning-off indication information, and the turning-off indication information indicates whether the radio frequency apparatus turns off the first module.

31. The method according to any one of claims 26 to 30, wherein the first time resource is any one of the following resources: a subframe resource, a symbol resource, and a slot resource.

32. The method according to any one of claims 25 to 31, wherein the first module comprises at least one of the following modules: a baseband processing module, an intermediate frequency processing module, a radio frequency processing module, and a power module.

33. A communication apparatus, comprising a processor, wherein the processor is coupled to a memory, the memory is configured to store a computer program or instructions, and the processor is configured to execute the computer program or the instructions, so that the method according to any one of claims 1 to 8, or claims 9 to 13, or claims 14 to 21, or claims 22 to 24 is implemented.

34. A computer-readable storage medium, comprising a computer program, wherein when the computer program runs on a computer, the computer is enabled to perform the method according to any one of claims 1 to 8, or claims 9 to 13, or claims 14 to 21, or claims 22 to 24.

35. A chip system, comprising a processor, configured to invoke a computer program from a memory and run the computer program, so that a communication device in which the chip system is installed performs the method according to any one of claims 1 to 8, or claims 9 to 13, or claims 14 to 21, or claims 22 to 24.
